# EUROPEAN PATENT APPLICATION

(11) **EP 2 806 398 A1**
(43) Date of publication of application: **26.11.2014**
(21) Application number: 13168875.6
(22) Date of filing: 23.05.2013
(51) Int. Cl.: G06T 7/00

(54) **Method of defining a region of interest**

(71) Applicant: Agfa Healthcare, 2640 Mortsel (BE)
(72) Inventor: De Witte, Yoni, 2640 Mortsel (BE); Vergote, Koen, 2640 Mortsel (BE)
(74) Representative: Verbrugghe, Anne Marie L.

(57) **Abstract**

Method for defining a region of interest for segmenting a feature in an image by successively applying a region growing algorithm with variable, increasing threshold, whereby explosive growth of the region of interest is avoided.

## Description

### FIELD OF THE INVENTION

The present invention relates to a method of defining a region of interest in an image / volume, more particular in a medical image.

### BACKGROUND OF THE INVENTION

Radiologists and specialist use volumetric measurements on different types of medical volume data (CT, MRI, PET, SPECT, etc. ) for diagnostic purposes and treatment planning. Typical examples are the follow-up of tumour growth during cancer treatment or measuring the size of an organ to plan for surgery.

In order to be able to perform such measurements the feature on which the measurement is to be performed needs to be segmented in the image. Preferably this image segmentation is performed automatically by means of a segmentation algorithm.

Algorithms for image segmentation exist and are widely applied.

However, due to the large variety of different applications (feature size and shape, imaging modality, image quality, etc.), it is not feasible to develop a fully automated tool that can handle all of the required cases.

US patent application 2000/0088644 discloses such a semi-automatic method for defining regions of interest in medical images. A list of voxels representative of an image is obtained. The list of voxels is sorted according to a variable, e.g. an intensity value. A user selection of an initial voxel is registered and at least one voxel group from the sorted list is selected as region of interest. The user interaction is based on a click-and-drag method. A threshold is determined from a so-called seed point in the image that the user clicked on. Next the position of the click point in the sorted list is found. All voxels in the sorted list of voxels up until the point that corresponds to the clicked point are extracted. Likewise the voxels of any children labels that have merged into the click point until this point are extracted and stored.

The threshold may be selected by clicking and dragging the mouse. In one of the described embodiments, the location of two voxels are used, the voxel at the click point and the voxel at the release point. The voxel having the highest intensity is used as upper threshold and the other voxel is used as lower threshold. Only voxels between those two thresholds are highlighted as region of interest.

Methods for identifying and segmenting a region of interest based on a region growing algorithm are often very susceptible to explosive growth, i.e. a small increase in the threshold can result in a large expansion of the segmentation. Typically, this occurs when the segmentation 'leaks' to nearby features. For example for a dense tumour that is close to a bone, above a certain threshold the region growing connects to the bone and segments the entire skeleton. This behaviour is undesired because the user doesn't want to use the tool to measure sparsely connected features, and furthermore the explosion results in a significantly increased processing time, possibly destroying the real-time feedback.

The present invention aims at solving the above-described problem.

### SUMMARY OF THE INVENTION

In order to overcome the above-mentioned problems the invention provides a method as set out in claim 1.

The method of the present invention for determining a region of interest on an image is based on the application of a region growing algorithm to the image starting from a seed point and successively applying a series of varying (increasing /decreasing) threshold values. This variation is steered by the user, based on the visual feedback.

In order to avoid explosive growth the method comprises the steps of comparing a candidate region of interest obtained by said region growing algorithm for a given threshold value with the candidate region of interest obtained by said region growing algorithm with a next lower and upper threshold value of said series and determining explosive region growth when said candidate regions of interest differ significantly. The difference can be based on size, shape, statistics etc. The use of the size is preferred since other parameters often require more complex, i.e. more time consuming parameters, which would negatively influence the real time feedback.

Specific features for preferred embodiments of the invention are set out in the dependent claims.

The method of the present invention is generally implemented in the form of a computer program product adapted to carry out the method steps of the present invention when run on a signal processing means such as a computer. The computer program product is commonly stored in a computer readable carrier medium such as a DVD. Alternatively the computer program product takes the form of an electric signal and can be communicated to a user through electronic communication.

Further advantages and embodiments of the present invention will become apparent from the following detailed description.

### DETAILED DESCRIPTION

According to the method of the present invention an image/volume represented by a pixel (2D) / voxel (3D) representation comprising a feature to be segmented is first visualised on a display screen coupled to a data processing system.

On the data processing system a region growing algorithm is running. By means of at least one identified seed point and a series of adaptable threshold values and the region growing algorithm a series of results, i.e. candidate regions of interest, for the segmentation operation are obtained. In order to prevent explosive growth, a so-called limiter is provided. The limiter operates on the basis of a predicted growth rate as explained below.

For its operation the region growing algorithm needs the input of seed points and a lower and upper threshold value. The region growing algorithm works as follows:
1) For each seed point, the corresponding pixel/voxel is retrieved, these are the seed pixels/voxels.
2) All seed pixels/voxels are indicated as 'included' in the region of interest (ROI)
3) All seed pixels/voxels are added to a list
4) The first pixel/voxel in the list is removed from the list and indicated as the 'active' pixel/voxel
5) All pixels/voxels that are connected to the 'active' pixel/voxel and are not yet indicated as 'included' are evaluated: if the pixel/voxel value is within the range defined by the lower and upper threshold value, the pixel/voxel is indicated as 'included' and added to the list.
6) Steps 4 and 5 are repeated until the list is empty.
7) Once the list is empty, all pixels/voxels indicated as 'included' are said to be within the ROI, all others are not.

The algorithm described higher is one example of a region growing algorithm. Other types of region growing algorithms such as algorithms based on applying a general threshold and consequent connected component analysis and competitive region growing may be envisaged.

According to one embodiment of this invention, only a single seed point is used. The location of this seed point is first identified by marking a position within the borders of region to be identified or a feature to be segmented. This can be done in various ways, by inputting the coordinates, clicking on the displayed image, etc. This position is then passed on to the region growing algorithm.

Next, the initial threshold values are determined. These initial values are based on statistical information retrieved from the direct neighbourhood of the seed voxel, e.g. the standard deviation of the voxels in the 26-connected neighbourhood. These values are passed on to the region growing algorithm, which is then executed and showing the first initial result, i.e. the first candidate region of interest.

Next the system provides that movement of an indicium (e.g. a slider, mouse cursor, hand gesture or any other input method) can modify the threshold values to obtain a more refined result. Both threshold values can be increased or decreased by moving in a certain direction. To simplify the required interaction, in this invention both thresholds are modified by a single movement, such that the increase in one value is equal to a similar decrease in the other value (e.g. dragging the mouse down decreases the lower threshold and increases the upper threshold, which will make the region grow).

This method is preferred for application on CT and MRI images. For PET and SPECT images, better results are obtained when setting the upper threshold infinitely high and only modifying the lower threshold.

The indicium can be a cursor operated by mouse control. The user interface is then implemented as a clicking and dragging operation: clicking for setting the seed point, dragging for modifying the threshold values. Other implementation may include the use of a pinch movement on a touchpad-based device, a slider in the GUI, or hand gestures captured by an appropriate device (cfr. Kinect, Leap Motion, etc.).

During the movement of the indicium, the threshold value is preferably continuously adapted (a certain value is substituted by a subsequent value) and fed into the region growing algorithm.

As a consequence hereof, the region growing algorithm generates a continuously changing region, i.e. a growing or shrinking region with increasing or decreasing surface and/or volume (depending on whether the algorithm is applied in 2D or 3D).

According to the method of the present invention the segmented region resulting from applying the region growing algorithm is visualized on the display screen, e.g. by highlighting part of the displayed image or by indicating the border or contour of the region.

The operation of changing the threshold values is continued until the visualized resulting region substantially corresponds with the feature to be segmented.

The instant at which this threshold changing operation is finished depends on the user's assessment of the correspondence between the visualized result of the region growing algorithm and the feature to be segmented.

Finally the result of the region growing algorithm using the final threshold value represents the segmented feature.

Once the feature is segmented, measurement operations may be applied to the feature. Examples of measurement operations are basic statistical operations like minimum, maximum and average value, standard deviation, or geometric information like volume, maximum diameter, etc.

In order to overcome the problem of explosive growth a limiter is added, the operation of which is based on the predicted growth rate of the region of interest.

As soon as the interactive segmentation is started, the threshold values and the corresponding volume for each region result are temporary stored before each modification by the user. For every new modification, the volume that is expected to correspond to the new threshold values is computed, e.g. based on a linear fit of the previous results. This predicted volume is then compared to the actual volume of the results and if the latter is significantly larger than the first, this is an indication for explosive growth. From a manual analysis of a number of representative cases (for different applications, modalities, etc.) it was found that a factor of 2-4, yields the best result in most of the cases.

To avoid premature stopping of growth for small regions, the mechanism is only activated for a region that contains a minimum amount of pixels/voxels. Again based on the same test cases, this minimum number was chosen between 100 and 1000.

When explosive growth is detected, the new result can be ignored and/or the user can be notified.

The current threshold values are used to define a confinement of the range of allowed threshold values. Any request to re-compute the result based on thresholds outside the allowed range is in this embodiment cancelled. This prevents the user from repeatedly trying to modify the threshold values within a range that only leads to explosive growth and thus invalid results. It thereby also maintains the real-time feedback, since explosive growth is also detrimental for the computation speed. This system is effective for a large variety of cases. By detecting and cancelling any operation that would result in explosive growth, this limiter greatly extends the effectiveness and usability of the tool.

As described higher, the segmentation method of the present invention is based on a region growing algorithm. When this is applied to 3D data, the computation time can be quite significant. Therefore, to accommodate the crucial real-time feedback to the user, an efficient parallel implementation of the region growing algorithm was developed. The implementation is based on the consumer-producer pattern for communication and data sharing. In this invention, this pattern was extended by allowing each thread to be both a consumer and a producer at the same time.

The implementation can be described as follows:
Distribution of workload and definition of threads:
   - The image/volume is divided into several blocks, e.g. of equal size.
   - For each block, a list is created containing all pixels/voxels within that block that need to be processed. If the list of pixels/voxels for a block is not empty, the block needs to be processed. Initially, these lists only contain the initial seed pixels/voxels which are marked as 'included'. During processing, other pixels/voxels may be added to theses lists.
   - A list is created containing all blocks that need to be processed. Initially, this list only contain blocks that contain any of the initial seed pixels/voxels. During processing, other blocks may be added to this list.
   - A number of computer threads are launched. There is one master thread and one or multiple slave threads.
   - Each slave thread checks the lists of blocks that need to be processed. If the list is not empty, the slave thread removes the first block from the list and starts processing it. If the list of blocks is empty, the slave thread is in an idle state and checks the list of blocks again after a fixed amount of time.
   - The master thread periodically checks the list of blocks. If the list of blocks is empty and all slave threads are idle, then the master threads stops all slave threads and the operation is completed.

Processing of one block by a slave thread:
- Each slave thread processes the list of pixels/voxels within a certain block in a way similar to the region growing described earlier in this document,
- The first pixel/voxel is removed from the list and marked as the 'active' pixel/voxel. This is the 'consumer' role of the slave thread.
- All pixels/voxels that are connected to the 'active' pixel/voxel and are not yet indicated as 'included' are evaluated: if the connected pixel/voxel value is within the range defined by the lower and upper threshold value, the connected pixel/voxel is indicated as 'included' and added to the list of pixels/voxels of the block to which the connected pixel/voxel belongs. This means that, for pixels/voxels at the edge of a block, the connected pixel/voxel may be added to the list of a different block than the one being processed by this slave thread. This is the 'producer' role of the slave thread.
- This process is repeated until the list of seed pixels/voxels for the current block is empty.

For computational efficiency, connected pixels/voxels that need to be added to the list of a different block are first stored in a temporary buffer and only written to this list when the buffer is full or when the slave thread has finished processing the current block. Due to the nature of the region growing algorithm, it is possible that a certain block is being processed several times.

Region growing algorithms may produce a noisy result due to the noise present in the acquired image data. This may result in a number of small holes in the segmented feature. To close these holes the user might increase the threshold value. However, this might result in a segmented area that is larger than the targeted feature and consequentially measurements performed on the segmented feature might be incorrect.

To solve this problem, in a specific embodiment of the present invention one or more morphological operations are applied to the result obtained by the region growing algorithm.

This operation effectively removes the holes and thereby provides (in real time) a clean segmentation to the user.

Examples of such morphological operations are dilation and erosion, which respectively expand and shrink the region using a structuring element. In one specific embodiment, the holes are filled using a closing operation (which is a combination of a dilation and erosion) of a certain size.

In another embodiment, noise in the result can be reduced by applying a filter to the images. However, this requires a pre-processing operation to be applied to the volume, as well as a duplicate of the images/volumes to be kept in memory. To avoid this issue, the implementation of the region grower can be modified to have inline filtering capabilities. This can be done by extending the evaluation criterion for marking a voxel as 'included'. Instead of just comparing the voxel's value with the upper and lower threshold, the criterion can be extended to also evaluate the voxel's neighbours, e.g. mark the voxel as 'included' when at least half of the neighbouring voxels' values are within the thresholds. For certain parameters, this extended criterion can be shown to be equal to applying the simple criterion to images that were prefiltered by a median filter. Since this filter is only applied to the voxels that are actually considered for region growing, it can be significantly faster than applying it to the entire volume in a pre-processing step.

It has been described that in one embodiment the threshold is adapted by moving the cursor (mouse movement) along the displayed image. Due to the large variety of applications, it is preferable to automatically determine the rate at which the threshold changes with regard to the mouse movements. If not, for many cases the mouse drag would be over- or under-sensitive. A specific embodiment comprises a smart determination of this rate, making the mouse drag sensitivity very similar for most cases. This sensitivity is based on the dimensions of the image on the display screen and the initial guess that is made when setting the seed point.

In addition, the initial start threshold values are not equal to the value of the seed point(s), but an initial guess is made based on the direct neighbourhood of the seed point. This minimizes the effort required from the user.

The method of the present invention can be implemented by a simple click-and-drag tool, a pinch movement on touchpad-based device or hand gestures captured by an appropriate device. Two user inputs are required: a seed point and a threshold value. The seed point can be set by clicking on a certain position within the image (the point from which to start region growing) and the threshold can be modified by dragging a mouse (and cursor). This dragging will result in increasing/decreasing the threshold, which will in its turn make the region grow or sink.

## Claims

1. Method of determining a region of interest in an image/volume by applying a region growing algorithm comprising the steps of
1) applying said region growing algorithm to said image with first lower and upper threshold values to generate a first candidate region of interest,
2) predicting a second region of interest by applying said region growing algorithm to said image with a second lower and upper threshold value to generate a second, predicted candidate region of interest,
3) comparing said first and second candidate region of interest,
4) detecting explosive region growth when said candidate regions of interest differ significantly.

2. A method according to claim 1 wherein a warning is generated when explosive growth is determined.

3. A method according to claim 1 wherein said predicted region of interest is ignored when explosive region growth is detected.

4. A method according to claim 1 wherein said second, predicted candidate region is significantly larger than said first candidate region.

5. A method according to claim 1 said explosive growth of said region is identified on the basis of a predicted growth rate, using linear interpolation of the relation between thresholds and volume of the segmented region for the thresholds that were previously applied.

6. A method according to claim 1 wherein said region of interest is obtained by the steps of
- displaying said image on a display screen coupled to a data processing system,
- identifying a seed point on said displayed image within said region of interest,
- inputting said seed point into a region growing algorithm running on said data processing system,
- based on statistical information of the seed point's neighbourhood, setting an initial value for threshold values used in said region growing algorithm and computing said region growing algorithm to obtain a first candidate region,
- moving an indicium along the displayed image in a predefined direction,
- in response of said movement increasing / decreasing adaptable lower and upper threshold values to obtain instantaneous threshold values,
- refining the region result by repeatedly inputting the instantaneous threshold values into said region growing algorithm and overwriting threshold values input in said region growing algorithm with the input instantaneous threshold values,
- visualizing the region obtained by applying said region growing algorithm with said instantaneous threshold values to said image,
- finishing the movement of said indicium when the region obtained by applying said region growing algorithm substantially corresponds with region of interest.

7. A method according to claim 6 wherein said region growing algorithm has the following steps:
1) For each seed point, the corresponding seed pixel/voxel is obtained,
2) All seed pixel/voxels are identified as 'included' in the region of interest (ROI),
3) all seed pixel/voxels are added to a list,
4) a first pixel/voxel in the list is removed from the list and identified as active pixel/voxel,
5) all pixel/voxels that are connected to an active pixel/voxel and are not yet identified as 'included' are evaluated: if the pixel/voxel value is within the range defined by a lower and upper threshold value, the pixel/voxel is defined as 'included' and added (?) to the list,
6) Steps 4 and 5 are repeated until the list is empty,
7) Once the list is empty, all pixel/voxel identified as 'included' are considered to be within the ROI, all others are not.

8. A method according to claim 6 wherein said indicium is a mouse-controlled cursor, a pinch move on a touchpad-based device, or hand gestures.

9. A method according to claim 1 wherein the result of said region growing algorithm is subjected to at least one of the following morphological operations: dilation, erosion, opening or closing operation.

10. A method according to claim 6 wherein the rate at which said threshold value is adapted in correspondence to movement of said indicium is determined by the image size on display screen and the statistical information of the neighbourhood of the seed point.

11. A method according to claim 1 wherein said image is a medical image.

12. A computer program product adapted to carry out the method of any of the preceding claims when run on a computer.

13. A computer readable medium comprising computer executable program code adapted to carry out the steps of any of claims 1 - 11.
